# EUROPÄISCHE PATENTSCHRIFT

(11) **EP 4 264 201 B1**
(45) Veröffentlichungstag und Bekanntmachung des Hinweises auf die Patenterteilung: **11.06.2025**
(21) Anmeldenummer: 21824496.0
(22) Anmeldetag: 26.11.2021
(51) Int. Cl.: G01F 1/84, A61J 1/00

(54) **PROZESSÜBERWACHUNGSVORRICHTUNG**
PROCESS MONITORING DEVICE
DISPOSITIF DE SURVEILLANCE DE PROCESSUS

(30) Priorität: 16.12.2020 DE 102020133851
(43) Veröffentlichungstag der Anmeldung: 25.10.2023
(73) Patentinhaber: Endress+Hauser Flowtec AG, 4153 Reinach (CH)
(72) Erfinder: SCHWENTER, Benjamin, 4226 Breitenbach (CH); BITTO, Ennio, 4147 Aesch (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2021/083209
(87) Internationale Veröffentlichungsnummer: WO 2022/128415

(56) Entgegenhaltungen:
- EP-B1- 1 954 565
- US-B2- 6 773 678

## Beschreibung

Die Erfindung betrifft eine Prozessüberwachungsvorrichtung, bevorzugt für pharmazeutische Bioprozessanwendungen.

Anlagen für Bioprozessanwendungen - Beispiele dafür sind Bioreaktoren oder Crossflow-Anlagen - dienen zur Aufnahme, zur Lagerung und/oder zum Mischen von biologischen Medien, welche Fluide und/oder Feststoffe umfassen. Die biologischen Medien werden üblicherweise in Einwegbehältern und/oder -beuteln bereitgestellt und in ein Gehäuse der Anlage für Bioprozessanwendungen eingebracht, wo sie gelagert, temperiert und/oder durchmischt werden. In einer solchen Anlage für Bioprozessanwendungen werden die Prozesseigenschaften der biologischen Medien mit unterschiedlichen Sensoren untersucht und/oder überwacht. An der Anlage für Bioprozessanwendungen kann eine oder können mehrere Sensoren angeordnet sein, mit der Messungen an dem Medium im Einwegbehälter oder im Schlauchsystem vorgenommen werden, wie z.B. Temperatur-oder pH-Wertmessungen. Hierbei wird der Sensor an einer Außenfläche des Gehäuses der Anlage für Bioprozessanwendungen so angeordnet, dass sie mit einem mediumsberührenden Abschnitt des Sensors durch die Gehäusewandung der Anlage für Bioprozessanwendungen hindurch in den Behälter und das Medium eindringt. Alternativ können die Sensoren in einem Schlauchsystem integriert sein, welches dazu eingerichtet ist, das Medium aus dem Behälter zu entnehmen. Dieses Schlauchsystem ist üblicherweise an der Außenfläche des Gehäuses angeordnet. Die Handhabung der Anlage für Bioprozessanwendungen erfolgt anwendungsabhängig in einer sterilen Umgebung oder unter Reinraumbedingungen.

Die DE 10 2016 008 655 A1 offenbart eine Anlage für biotechnologische Anwendungen, insbesondere einen Bioreaktor, welche an der Mantelfläche des Gehäuses Systemschienen oder Träger aufweist, zum Anbringen von Schläuchen und Sensoren an der Außenseite des Gehäuses. Weiterhin werden Triclamps als Befestigungsmittel offenbart.

Coriolis-Durchflussmessgeräte werden üblicherweise bei prozessautomatisierten Industrieanlagen in Rohrleitungen über Anschlussvorrichtungen wie Flansche, Verbindungsstutzen etc. eingesetzt. Ein Beispiel dafür ist eine Abfüllstation für flüssige oder gasförmige Stoffe, wie sie in der DE 10 2006 013 826 A1 oder eine Prozessleitung wie sie in der DE 10 2017 128 565 A1 offenbart wird. Ein weiteres Beispiel für den Einsatz eines Coriolis-Durchflussmessgerätes in einer Abfüllmaschine wird in der EP1954565B1 offenbart.

Es sind außerdem Coriolis-Durchflussmessgeräte mit austauschbaren Einweg-Messrohrmodulen bekannt, die für Single-Use Anwendungen in Prozessüberwachungsvorrichtungen geeignet sind. So wird beispielsweise in der WO 2011/099989 A1 ein Verfahren zur Herstellung eines monolithisch ausgebildeten Messrohrmoduls eines Coriolis-Durchflussmessgerätes mit gebogenen Messrohren offenbart, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen modularen Aufbau des Coriolis-Durchflussmessgerätes, wodurch ein Austausch des mediumsberührenden Teils des Messgerätes ermöglicht wird. Bisher ist nichts über die Integration des Coriolis-Durchflussmessgerätes in Prozessüberwachungsanlagen für pharmazeutische Bioprozessanwendungen bekannt.

Der Erfindung liegt die Aufgabe zugrunde eine Prozessüberwachungsvorrichtung bereitzustellen, die eine Selbstentleerung der auswechselbaren Messrohre gewährleistet.

Die Aufgabe wird gelöst durch die Prozessüberwachungsvorrichtung nach Anspruch 1.

Die erfindungsgemäße Prozessüberwachungsvorrichtung, bevorzugt für pharmazeutische Bioprozessanwendungen, umfassend:
- ein Messrohrmodul,
   wobei das Messrohrmodul mindestens ein, von einem Medium durchströmbares Messrohr umfasst;
- ein Aufnahmemodul,
   wobei das Aufnahmemodul eine Aufnahmemodulkörper aufweist, der zumindest teilweise eine Aufnahme begrenzt,
   wobei das Messrohrmodul in die Aufnahme einführbar ist,
   wobei das Messrohrmodul mechanisch trennbar mit dem Aufnahmemodul verbindbar ist; und
- eine Anlage insbesondere für biotechnische Anwendungen,
   wobei die Anlage ein Gehäuse aufweist,
   wobei das Gehäuse eine insbesondere aus Blech gebildete Gehäusewandung aufweist, welche ein Gehäuseinneres begrenzt,
   wobei die Gehäusewandung eine Abdeckung aufweist,
   wobei die Abdeckung eine Abdeckungsöffnung aufweist,
   wobei sich das Aufnahmemodul insbesondere die Aufnahme durch die Abdeckungsöffnung in das Gehäuseinnere erstreckt,
   wobei sich die Aufnahme in eine Aufnahmerichtung erstreckt,
   wobei das Aufnahmemodul derart in der Abdeckungsöffnung angeordnet ist, dass die Aufnahmerichtung einen vektoriellen Anteil mit einer Richtung entgegengesetzt zu einer Richtung einer Schwerkraft aufweist,
   Erfindungsgemäß ist vorgesehen, dass das Aufnahmemodul einen Abschnitt aufweist,
   wobei sich der Abschnitt außerhalb des Gehäuseinnere befindet,
   wobei das Aufnahmemodul im Abschnitt einen insbesondere umlaufenden Absatz aufweist,
   wobei die Abdeckung eine Abdeckungsfläche aufweist,
   wobei der Absatz eine Absatzfläche aufweist,
   wobei die Absatzfläche und die Abdeckungsfläche einander zugewandt sind,
   wobei ein Neigungskörper zwischen Absatzfläche und Abdeckungsfläche eingespannt ist,
   wobei der insbesondere spitzwinklige Neigungskörper keilförmig ausgebildet ist.

Die Verwendung eines Neigungskörpers hat den Vorteil, dass eine einfache Montage des Aufnahmemoduls an der Anlage ermöglicht und eine Selbstentleerbarkeit bis zu einem bestimmten Grad gewärhbar wird. Somit lassen sich auch bestehende System einfach aufrüsten. Das Einspannen des Neigungskörpers hat einen Vorteil gegenüber bekannte stoffschlüssig verbundene Anschlüsse (siehe EP 1 136 818 B1), dass das Anbringen deutlich vereinfacht und eine Anordenbarkeit an besonders dünnwandigen Abdeckungen aus Blech möglich ist ohne, dass mechanischer Stress in die Gehäusewandung eingebracht wird. Dafür kann eine Befestigungsvorrichtung zum form- und/oder kraftschlüssigen Verbinden des Aufnahemmoduls mit der Gehäusewandung vorteilhafterweise im Gehäuseinneren angeordnet.

Vorteilhafte Ausgestaltung der Erfindung sind Gegenstand der Unteransprüche.

Eine Ausgestaltung sieht vor, dass der Neigungskörper eine erste Seitenfläche aufweist in der eine erste Seitenflächenebene verläuft,
wobei der Neigungskörper eine zweite Seitenfläche aufweist in der eine zweite Seitenflächenebene verläuft,
wobei sich die erste Seitenflächenebene und die zweite Seitenflächenebene unter einen Winkel *α* von 0,1° bis 15°, insbesondere 0,2° bis 10° und bevorzugt von 0,5° bis 7° aufweist.

Eine Ausgestaltung sieht vor, dass der Neigungskörper eine Neigungskörperöffnung aufweist,
wobei sich das Aufnahmemodul zumindest teilweise durch die Neigungskörperöffnung erstreckt.

Eine Ausgestaltung sieht vor, dass der Neigungskörper als Dichtmittel, insbesondere aus einem EPDM Baustoff zum Abdichten des Gehäuseinneren gegen Flüssigkeiten ausgebildet ist.

Dies hat den besonderen Vorteil, dass auf ein zusätzliches Dichtmittel (wie z.B. O-Ring, Dichtscheibe) verzichtet werden kann. Der Neigungskörper, welcher dazu eingerichtet ist, eine geneigte Anordnung des Messrohrmoduls in der Aufnahme zu gewährleisten, erfüllt somit ebenfalls die abdichtende Eigenschaften eines Dichtmittels. Dabei fällt das Dichtmittel unter die Schutzarten der IP00 bis IP6K9K (ISO 20653).

Eine Ausgestaltung sieht vor, dass der Neigungskörper eine Neigungskörperaufnahme für ein Dichtmittel aufweist,
wobei ein Dichtmittel in der Neigungskörperaufnahme angeordnet ist.

Eine Ausgestaltung sieht vor, dass zwischen Neigungskörper und Abdeckungsfläche eine scheibenförmiges Dichtmittel angeordnet ist.

Eine Ausgestaltung sieht vor, dass der Neigungskörper in einem Längsschnitt eine Grundform eines insbesondere rechtwinkligen Trapezes annimmt.

Das rechtwinklige Trapez weist zwei parallel Seiten auf. Dabei weist die kürzere Seite ein minimale Länge von 3 mm und die längere Seite eine maximale Länge von 45 mm aus. Die jeweiligen Längen der beiden parallelen Seiten ist vorzugsweise so gewählt, dass eine ausreichende Neigung zur Selbstentleerung bewirkt wird und gleichzeitig eine für die Prozessanwendungen vorgegebene Beabstandung des Schlauchsystem - in dem das zu führende Medium in das Messrohrmodul ein- und ausgeführt wird - erfüllt wird.

Eine Ausgestaltung sieht vor, dass der Neigungskörper eine rechteckige Grundform aufweist mit einem durch die Neigungsöffnung gebildeten rechteckigen Ausschnitt.

Eine Ausgestaltung sieht vor, dass das Aufnahmemodul eine Befestigungsanordnung umfasst,
wobei die Befestigungsanordnung im Gehäuseinneren angeordnet ist,
wobei die Befestigungsanordnung dazu eingerichtet ist, das Aufnahmemodul mit der Abdeckung insbesondere mechanisch lösbar zu verbinden.

Der Vorteil der Ausgestaltung liegt darin, dass eine bessere Reinigbarkeit von außerhalb des Gehäuses gewährleistet wird, wenn sich die Befestigungsanordnung ausschließlich im Gehäuseinneren befindet. Keine weiteren Öffnungen in der Abdeckung bedeutet weniger Stellen an denen Feuchtigkeit in das Gehäuseinnere eintreten kann

Eine Ausgestaltung sieht vor, dass die Anlage einen Bioreaktor oder eine Anlage für chromatographische Aufreinigungsverfahren umfasst.

Als Bioreaktor bzw. Fermentationsreaktor bezeichnet man einen Behälter, in dem unter kontrollierten, vorher definierten Bedingungen biologische Prozesse ablaufen bzw. bestimmte Kulturen im einem Medium kultiviert werden sollen. Die Anwendung eines Bioreaktors ist wichtiger Bestandteil der pharmazeutische Bioprozesstechnologie. Die Behälter können in einem Gehäuse angeordnet sein und die Prozesseigenschaften des Mediums mittels Sensoren überwacht werden.

Unter Chromatographie ist ein Verfahren zu verstehen, das die Auftrennung eines Stoffgemisches auf Grund einer unterschiedlichen Verteilung seiner Einzelbestandteile zwischen einer stationären und einer mobilen Phase erlaubt. Dies findet beispielsweise Anwendung in der Produktion zur Reinigung von Substanzen, insbesondere in der Herstellung von Biopharmazeutika. Die Cross-Flow-Filtration, zu deutsch Querstromfiltration, ist eine weitere Methode zum Filtern von Medien.

Eine Ausgestaltung sieht vor, dass das Messrohrmodul eine erste Schwingungserregerkomponente mindestens eines Schwingungserregers aufweist, welcher dazu eingerichtet ist, das Messrohrmodul insbesondere das mindestens eine Messrohr zu Schwingungen anzuregen,
wobei das Messrohrmodul eine erste Schwingungssensorkomponente mindestens eines Schwingungssensors aufweist, welcher dazu eingerichtet ist, die Schwingungen des mindestens einen Messrohres zu erfassen,
wobei das Aufnahmemodul eine zweite Schwingungserregerkomponente des mindestens einen Schwingungserregers aufweist,
wobei das Aufnahmemodul eine zweite Schwingungssensorkomponente des mindestens einen Schwingungssensors aufweist.

Die Aufteilung der Schwingungssensorkomponenten und Schwingungserregerkomponenten auf Messrohrmodul und Aufnahmemodul hat den Vorteil, dass nur ein Teil der Schwingungssensorkomponenten und Schwingungserregerkomponenten beim Austausch des Messrohrmoduls gewechselt werden. Gerade die Schwingungssensorkomponenten und Schwingungserregerkomponenten, welche an dem Aufnahmemodul angeordnet sind, sind somit für eine Vielzahl an Messdurchläufen einsetzbar. Handelt es sich bei dem Messrohrmodul um ein Single-Use bzw. Wegwerfteil, so wird gleichzeitig die Menge an elektronischen oder magnetischen Ausschuss reduziert.

Eine Ausgestaltung sieht vor, dass zumindest das Messrohrmodul und das Aufnahmemodul ein modulares Coriolis-Durchflussmessgerät bilden.

Coriolis-Durchflussmessgeräte sind dafür bekannt, dass sie eine sehr hohe Messgenauigkeit aufweisen und zusätzlich zum Massedurchfluss auch Auskunft zur Viskosität und zur Dichte des zu führenden Mediums geben können. Dies ist mit herkömmlichen Gewichtswaagen nicht möglich.

Die Erfindung wird anhand der nachfolgenden Figuren näher erläutert. Es zeigt:
Fig. 1: eine erfindungsgemäße Prozessüberwachungsvorrichtung;
Fig. 2A-C: drei Ansichten auf ein Messrohr- und Aufnahmemodul;
Fig. 3A-B: eine teilweise geschnittene Innenansicht auf die Prozessüberwachungsvorrichtung mit einer ersten Ausgestaltung der Befestigungsanordnung und eine Seitenansicht auf die erste Ausgestaltung der Befestigungsanordnung;
Fig. 4: eine teilweise geschnittene Innenansicht auf die Prozessüberwachungsvorrichtung mit einer zweiten Ausgestaltung der Befestigungsanordnung;
Fig. 5: eine Seitenansicht auf das erste Befestigungsmittel der zweiten Ausgestaltung der Befestigungsanordnung; und
Fign. 6A-D: jeweils einen Längsschnitt durch eine Ausgestaltung des Neigungskörpers.

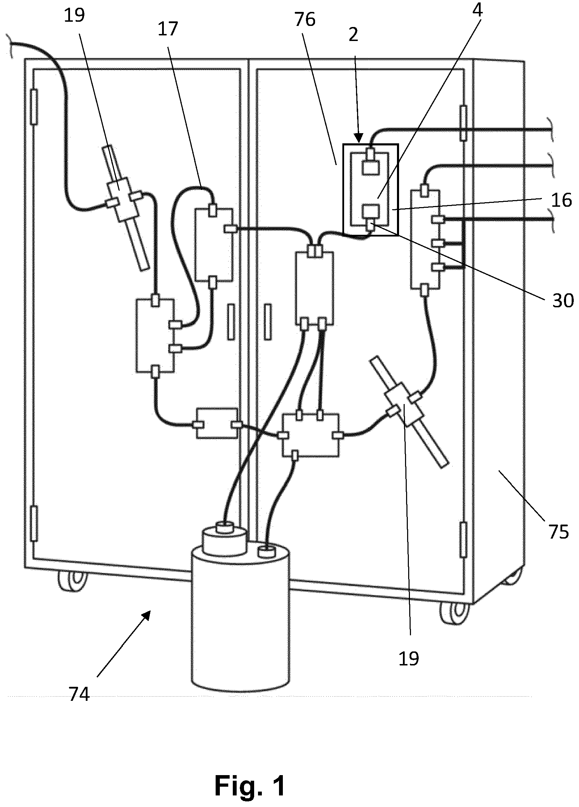

Die Fig. 1 zeigt eine erfindungsgemäße Prozessüberwachungsvorrichtung für pharmazeutische Bioprozessanwendungen in einer Anlage für biotechnische Anwendungen 74. Ein Messrohrmodul 4 und ein Aufnahmemodul 16 bilden zusammen ein Coriolis-Durchflussmessgerät 2. Das Messrohrmodul 4 weist mindestens ein, von einem Medium durchströmbares Messrohr 3 und ist als austauschbare Komponente des Coriolis-Durchflussmessgerätes 2 eingerichtet. Dafür weist es vorzugsweise keine elektronischen Komponenten auf, welche über einen elektrischen Kontakt mit einer Spannungsquelle versorgt werden müssen. Das Messrohrmodul 4 weist eine erste Schwingungserregerkomponente mindestens eines Schwingungserregers auf, welcher dazu eingerichtet ist, das Messrohrmodul 4, insbesondere das mindestens eine Messrohr 3 zu Schwingungen anzuregen. Zudem weist das Messrohrmodul 4 eine erste Schwingungssensorkomponente mindestens eines Schwingungssensors auf, welcher dazu eingerichtet ist, die Schwingungen des mindestens einen Messrohres 3 zu erfassen. Die erste Schwingungserregerkomponente und die erste Schwingungssensorkomponente sind vorzugsweise Magnete. Weiterhin weist das Messrohrmodul 4 Prozessanschlüsse 30 auf, die gleichzeitig als Verteilerstück ausgebildet sind.

Das Aufnahmemodul 16 ist ein fester Bestandteil der Anlage für biotechnische Anwendungen 74 und weist die elektronischen Komponenten auf, mit denen das Coriolis-Durchflussmessgerät 2 betrieben wird und das durchflussabhängige Messsignal erfasst wird. Das Aufnahmemodul 16 weist eine Aufnahme 23 für das Messrohrmodul 4 auf, in welche das Messrohrmodul 4 einschiebbar ist. Zudem ist das Messrohrmodul 4 mechanisch trennbar bzw. lösbar mit dem Aufnahmemodul 16 verbindbar, um einen bedienerfreundlichen Austausch des Messrohrmoduls 4 zu gewährleisten. Bei einem Wechsel der Anwendung kann das Messrohrmodul 4 gegen ein neues sterilisiertes Messrohrmodul 4 ausgetauscht werden. Das Aufnahmemodul 16 weist eine zweite Schwingungserregerkomponente des mindestens einen Schwingungserregers und eine zweite Schwingungssensorkomponente des mindestens einen Schwingungssensors auf. Dabei handelt es sich um die Erregerspule und die mindestens eine Sensorspule, welche jeweils mit einer Messschaltung elektrisch verbunden sind und darüber gesteuert bzw. bemessen werden. Das Aufnahmemodul 16 ist nicht mediumsberührend ausgelegt, jedoch so ausgestaltet, dass es reinigbar ist.

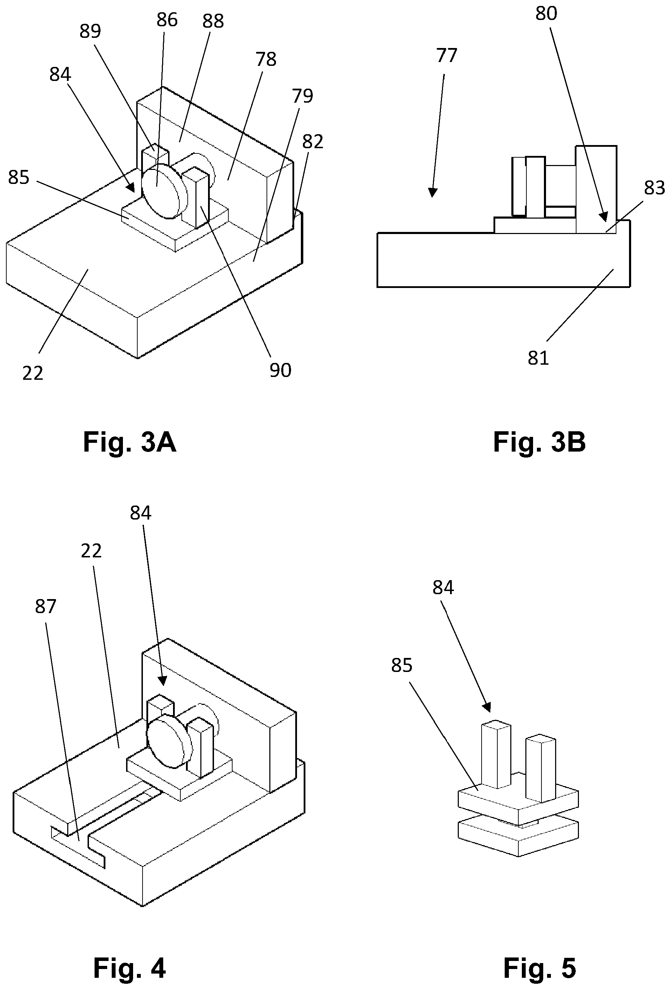

Die Anlage 74 für biotechnische Anwendungen weist ein Gehäuse 75 mit einer Gehäusewandung 76 auf, welches ein Gehäuseinneres begrenzt. Die Gehäusewandung 76 ist aus Blech gefertigt. Das Aufnahmemodul 16 ist in einer Abdeckungsöffnung der Gehäusewandung 76 angeordnet. Das Aufnahmemodul 16, insbesondere die Aufnahme des Aufnahmemoduls 16 erstreckt sich durch die Abdeckungsöffnung 79 in das Gehäuseinnere. Eine Befestigung des Aufnahmemoduls 16 erfolgt durch das Gehäuseinnere (siehe Fig.3-6). Das Aufnahmemodul 23 kann derart in der Abdeckungsöffnung 79 angeordnet sein, dass die Aufnahmerichtung - welche durch die Richtung der Erstreckung des Aufnahmemoduls definiert ist - einen vektoriellen Anteil mit einer Richtung entgegengesetzt zu einer Gravitationsrichtung aufweist. Die Anlage 74 kann einen Bioreaktor, eine Anlage für chromatographische Aufreinigungsverfahren, eine Crossflow-Anlage oder ähnliches umfassen.

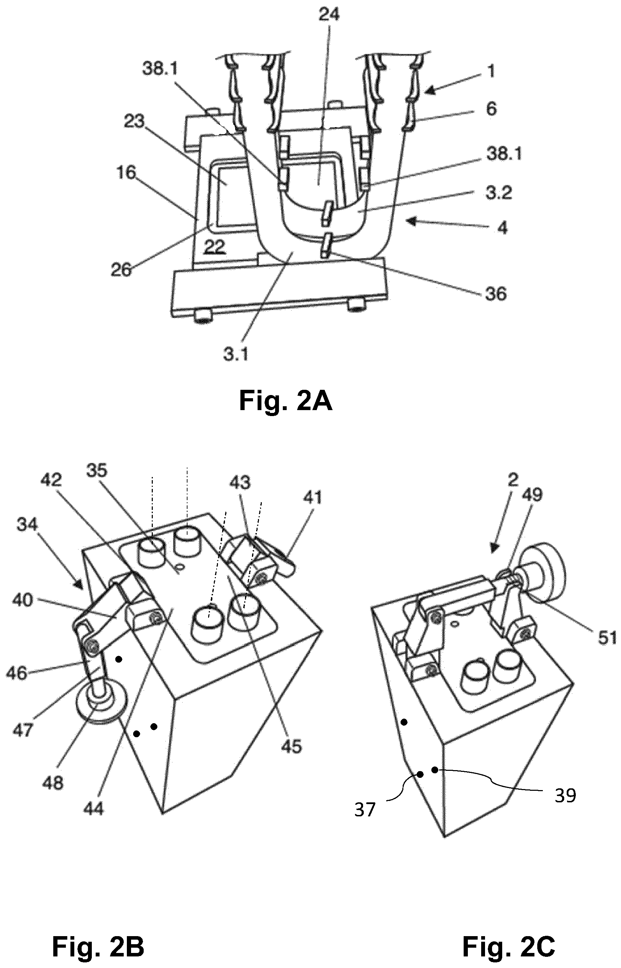

Die Fig. 2A-C zeigen eine Bilderreihe einzelner Montageschritte eines erfindungsgemäßen Messgerätes 2. Das Messrohrmodul 4 umfasst zwei Messrohre 3.1, 3.2, die über eine Koppleranordnung 1 miteinander mechanische gekoppelt sind. Die Koppleranordnung 1 umfasst in der abgebildeten Ausgestaltung sechs Kopplerelemente 6, welche die beiden Messrohre 3.1, 3.2 teilweise umgreifen. Das Messrohrmodul 4 ist als ein Einwegartikel ausgebildet und kann in ein vorgesehenes Aufnahmemodul 16 mechanisch lösbar angeordnet und befestigt werden. Die zwei Messrohre 3.1, 3.2 umfassen jeweils einen Messrohrkörper, welcher zumindest teilweise aus Stahl gebildet ist. An den Messrohrkörpern sind jeweils ein Erregermagnet 36 und zwei Sensormagnete 38.1, 38.2 angebracht. Das Aufnahmemodul 16 weist eine Aufnahme 23 auf, die von einer Frontfläche des Aufnahmemodulkörpers 22 in dessen Längsrichtung erstreckt. Zudem weist der Aufnahmemodulkörper 22 des Aufnahmemoduls 16 eine Montagefläche 26 auf, auf welche das Messrohrmodul 4, insbesondere die Fixierkörperanordnung 35 im eingebauten Zustand aufliegt, und die derart ausgebildet ist, dass die Messrohre 3.1, 3.2 des Messrohrmoduls 4 nicht die Wandung des Aufnahmemoduls 16 berühren. Die Montagefläche 26 umschließt die Aufnahme 29 in einem Querschnitt, so dass beim Anordnen des Messrohrmoduls 4 ein gesamter Randbereich der Fixierkörperanordnung 35 auf der Montagefläche 26 aufliegt. Die zwei Erregerspulen des Schwingungserregers und die vier Sensorspulen des Schwingungssensors (nicht abgebildet) sind in einer inneren Mantelfläche des Aufnahmemoduls 16 angeordnet, insbesondere jeweils verteilt an zwei diametral orientierte Seitenflächen der Aufnahme 23. Die Erregerspulen und Schwingungsspulen sind bevorzugt in den Aufnahmemodulkörper 22 eingelassen, so dass sie beim Einführen des Messrohrmoduls 4 nicht beschädigt werden.

Im eingebauten Zustand ist das Messrohrmodul 4 in der Aufnahme 23 angeordnet und die Fixierkörperanordnung 35 liegt auf der Montagefläche 26 auf. Das Messrohrmodul 4 ist nun bereit mittels der Fixiervorrichtung 34 an dem Aufnahmemodul 16 befestigt zu werden. Dies ist notwendig, damit eine Messung mit einem stabilen Nullpunkt möglich ist. Dafür weist die Fixiervorrichtung 34 ein erstes Fixierelement 40 und ein zweites Fixierelement 41 auf, welche jeweils schwenkbar ausgebildet sind und eine Fixierfläche 42, 43 aufweisen. Die Fixierflächen 42, 43 befinden sich jeweils an einem ersten Ende des Fixierelementes 40, 41. Die Fixierelemente 40, 41 weisen jeweils einen länglichen Fixierelementkörper auf. Im das erste Ende umfassenden Endabschnitt sind die Fixierelemente 40, 41 an dem Aufnahmemodulkörper 22 schwenkbar um eine Rotationsachse befestigt. Die Fixierelemente 40, 41 sind dazu eingerichtet die Fixierkörperanordnung 44 gegen die Montagefläche 26 zu drücken um somit Bewegungen der Fixierkörperanordnung zu unterdrücken. Das erste Fixierelement 40 ist mit einer schwenkbaren Verbindungsvorrichtung 46 verbunden, die einen Verbindungskörper 47 umfasst. Die Verbindung zwischen dem Fixierelemente 40 und der schwenkbaren Verbindungsvorrichtung 46 befindet sich am zweiten Ende des ersten Fixierelementes 40. Der Verbindungskörper 47 ist zumindest teilweise kubisch und im Endabschnitt zylindrisch ausgebildet. Dort ist am Verbindungskörper 47 eine Schließvorrichtung 48 angeordnet. In der abgebildeten Ausgestaltung weist der Endabschnitt des Verbindungskörpers 47 ein Außengewinde auf und die Schließvorrichtung 48 ist als eine Schraube ausgebildet. Abhängig von der Anwendung und den Anforderungen auf die Messperformance kann die Schließvorrichtung 48 auch als eine Drehmomentschraube, ein Klemmhebel, ein Spannbügel, ein Spanner, ein Schnellspanner, ein Spannhebel, eine Spannpratze, ein Haubenverschluss und/oder ein Exzenterhebel ausgebildet sein. Alternativ (nicht abgebildet) kann die Schließvorrichtung 48 als eine Schnalle, insbesondere eine Maschettenschnalle ausgebildet sein, die an einem ersten Fixierelement 40 der zwei Fixierelemente 40, 41 angeordnet ist. Entsprechend ist ein Schwenkteil am zweiten Fixierelement 41 angeordnet. Dabei ist das Schwenkteil als ein Manschettenschwenkteil ausgebildet, welches mindestens einen Haken, insbesondere einen Manschettenhaken aufweist. Im fixierten Zustand berühren die Fixierflächen 42, 43 der Fixierelemente 40, 41 die Auflageflächen 44, 45 der Fixierkörperanordnung 35. Der Verbindungskörper 47 der Verbindungsvorrichtung 46 steht in Wirkung mit dem zweiten Fixierelement 41, d.h. die Verbindungsvorrichtung 46, insbesondere der Verbindungskörper 47 verbindet das erste Fixierelement 40 mit dem zweiten Fixierelement 41. Das zweite Fixierelement 41 weist am zweiten Ende eine Führung 51 für den Endabschnitt des Verbindungskörper 47 auf. Der Verbindungskörper 47 erstreckt sich im geschlossenen Zustand entlang der Führung 51 des zweiten Fixierelementes 41. Die Schließvorrichtung 48 berührt die Einspannfläche 49 des zweiten Fixierelementes 41. Beim Anziehen der Schließvorrichtung 48 - in Form einer Schraube - werden die zwei Fixierelemente gleichmäßig angenähert. Die Schließvorrichtung 48 drückt gegen die Einspannfläche 49. Dadurch, dass die zwei Fixierelemente 40, 41 schwenkbar um eine Rotationsachse ausgebildet sind, bewirkt das Festziehen und entsprechende Annähern der Fixierelemente 40, 41 eine Kraft auf die Fixierkörperanordnung 35 parallel zur Längsrichtung des Messrohrmoduls 4 in Richtung der Montagefläche 26. Diese Kraft sorgt für eine gleichmäßige Befestigung des Messrohrmoduls 4 am Trägereinheitskörper 22. Die Messrohre 3.1, 3.2 weisen jeweils im Einlaufabschnitt eine Einlauflängsachse und im Auslaufabschnitt eine Auslauflängsachse, wobei eine erste Längsebene durch die Einlauflängsachsen der Messrohre verläuft, wobei eine zweite Längsebene durch die Auslauflängsachsen der Messrohre verläuft, wobei die Fixierkörperanordnung 35 eine zweite Stirnseite aufweist, welche entgegengesetzt zur ersten Stirnseite orientiert ist, wobei die erste Längsebene und die zweite Längsebene eine erste Fläche auf der zweiten Stirnseite der Fixierkörperanordnung 35 begrenzt, wobei die Einlauflängsachse und die Auslauflängsachse des ersten Messrohres 3.1 in einer dritten Längsebene verlaufen, wobei die Einlauflängsachse und die Auslauflängsachse des zweiten Messrohres 3.2 in einer vierten Längsebene verlaufen, wobei die dritte Längsebene und die vierte Längsebene auf der zweiten Stirnseite eine zweite Fläche begrenzen, wobei im Befestigungszustand die Fixierflächen 42, 43 der Fixierelemente 40, 41, insbesondere ausschließlich auf der ersten Fläche aufliegen und dabei außerhalb der zweiten Fläche liegt. Alternativ kann die Fixierkörperanordnung 35 mehrteilig ausgebildet sein, wobei ein Teil stoffschlüssig mit dem mindestens einen Messrohr 3.1, 3.2 verbunden ist und ein weiterer Teil zumindest formschlüssig angebracht ist. Dieser weitere Teil ist derart ausgebildet und eingerichtet als Prozessanschluss für die Messrohre 3.1, 3.2 an eine Prozessleitung zu dienen. Dazu kann der weitere Teil beispielsweise genormte Prozessanschlüsse, wie Flansche oder Gewinde aufweisen.

Die Fig. 3A und B zeigen eine teilweise geschnittene Innenansicht auf die Prozessüberwachungsvorrichtung mit einer ersten Ausgestaltung der Befestigungsanordnung 84 für das Befestigen der Aufnahmemodul 16 an der Gehäusewandung, insbesondere an der Abdeckung 78 und eine Seitenansicht auf die erste Ausgestaltung der Befestigungsanordnung 84. In der Abdeckung 78 ist eine Öffnung 79 eingearbeitet, in welche das Aufnahmemodul 16 angeordnet ist. Das Aufnahmemodul 16, insbesondere die Aufnahme 23 erstreckt sich durch die Öffnung 79 in das Gehäuseinnere 77 des Gehäuses. Zusätzlich zum Aufnahmemodul 16 können sich Pumpen, Lüfter, Kabel, Schläuche, Elektronikbauteile und Behälter für das Medium im Gehäuseinneren 77 befinden. Weiterhin weist das Aufnahmemodul 16 im Aufnahmeabschnitt 80 einen insbesondere umlaufenden Absatz 81 mit einer Absatzfläche 83 auf. Eine Abdeckungsfläche 82 der Abdeckung 78 und die Absatzfläche 83 sind einander zugewandt und liegen im eingebauten Zustand aufeinander. Der Absatz ist schematisch dargestellt und in der Regel deutlich dicker als die Abdeckung 78. Die Befestigung wird über eine Befestigungsanordnung 84 realisiert, die im Gehäuseinneren 77 angeordnet ist. Die Befestigungsanordnung 84 ist dazu eingerichtet, das Aufnahmemodul 16 mit der Abdeckung 78 mechanisch zu verbinden. Dafür weist sie ein erstes Befestigungsmittel 85 und ein zweites Befestigungsmittel 86 auf. Das erste Befestigungsmittel 85 ist mit dem Aufnahmemodul 16 verbunden und das zweite Befestigungsmittel 86 ist mit dem ersten Befestigungsmittel 85 so verbunden, dass sie in Wirkung miteinander stehen. Die Rückseite 88 der Abdeckung 78 steht in Kontakt mit dem zweiten Befestigungsmittel 86, welches dazu eingerichtet ist, das erste Befestigungsmittel 85 zumindest teilweise bevorzugt entgegengesetzt zur Rückseite 88 zu verbiegen. Dafür weist das erste Befestigungsmittel 85 einen ersten Schenkel 89 und einen zweiten Schenkel 90 auf, welche im Wesentlichen parallel zueinander verlaufen und beabstandet sind. Das zweite Befestigungsmittel 86 umfasst in der abgebildeten Ausgestaltung eine Schraube, die sich zwischen dem ersten Schenkel 89 und dem zweiten Schenkel 90 in einer mit Gewinde versehenen Öffnung erstreckt. Das erste Befestigungsmittel 85 ist gemäß der abgebildeten Ausgestaltung mittels einer Schraube mit dem Aufnahmemodulkörper 22 befestigt. Alternativ zu den zwei Schenkel kann auch eine einzelne Platte mit einem Sackloch und einem Gewinde vorgesehen werden. Der Aufnahmemodulkörper 22 umfasst vorzugsweise Stahl.

Die Fig. 4 zeigt eine teilweise geschnittene Innenansicht auf die Prozessüberwachungsvorrichtung mit einer zweiten Ausgestaltung der Befestigungsanordnung 84. Die zweite Ausgestaltung unterscheidet sich von der ersten Ausgestaltung im Wesentlichen durch die zusätzliche Führung 87, welche im Aufnahmemodulkörper 22 eingearbeitet ist. Die Form des ersten Befestigungsmittels 85 erlaubt es die Befestigungsanordnung 84 in Längsrichtung des Aufnahmemoduls 16 beweglich anordenbar. Die Führung 87 ist als T-Nut und der Körper des ersten Befestigungsmittel 85 ist entsprechend abschnittsweise komplementär dazu ausgebildet (siehe Fig. 5). Das erste Befestigungsmittel 85 kann ebenfalls über eine Schraube form- und/oder kraftschlüssig mit dem Aufnahmemodulkörper 22 verbunden werden. Dabei müssen keine Öffnungen mit Gewinde im Aufnahmemodulkörper 22 vorgesehen werden. Stattdessen kann das erste Befestigungsmittel 85 in der Führung durch Verspannen des Grundkörpers eingespannt werden.

Die Fig. 5 zeigt eine perspektivische Ansicht auf das erste Befestigungsmittel 85 der zweiten Ausgestaltung der Befestigungsanordnung 84. Das erste Befestigungsmittel 85 weist in einem Querschnitt zumindest in einem Endabschnitt einen T-förmige Grundform auf. Diese ist komplementär zu der Form der Führung ausgestaltet. Der Grundkörper des ersten Befestigungsmittels 85 umfasst vorzugweise Stahl.

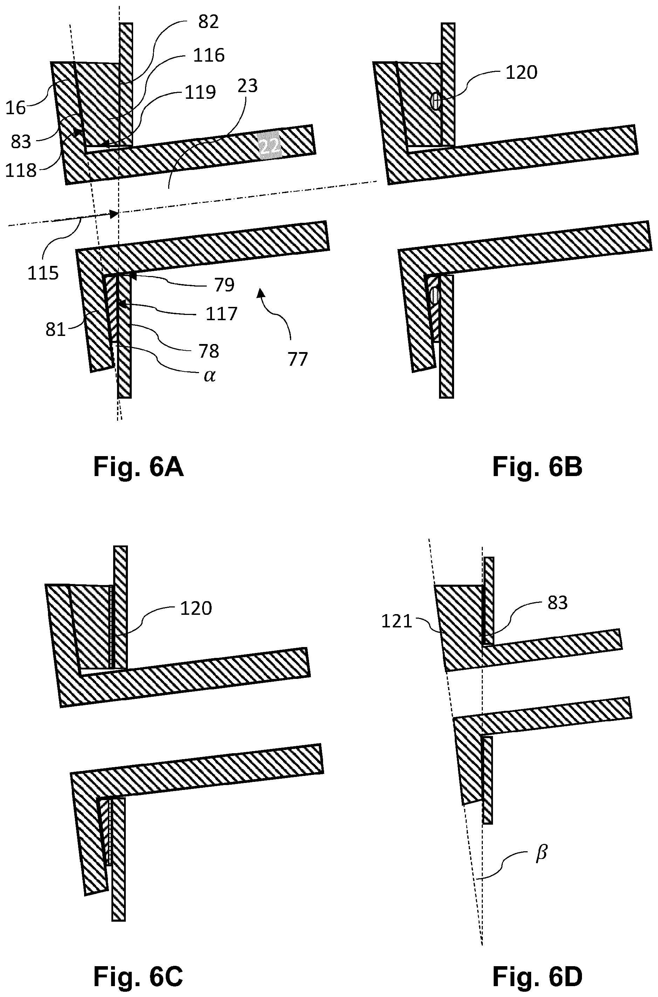

Fign. 6A bis D zeigen jeweils eine Querschnitt durch eine Prozessüberwachungsvorrichtung, insbesondere ein Längsschnitt des erfindungsgemäßen Neigungskörpers 116. Die Fig. 6A zeigt eine Prozessüberwachungsvorrichtung, welche bevorzugt für pharmazeutische Bioprozessanwendungen geeignet ist und ein Messrohrmodul (nicht abgebildet) mit mindestens einem, von einem Medium durchströmbaren Messrohr, ein Aufnahmemodul 16 mit einem Aufnahmemodulkörper 22, welcher zumindest teilweise eine Aufnahme 23 für das mindestens eine Messrohr des Messrohrmoduls begrenzt und einer Anlage. Das Messrohrmodul 4 ist in die Aufnahme 23 einführbar und mechanisch trennbar d.h. form- und/oder kraftschlüssig verbindbar. Die Anlage, welche insbesondere für biotechnische Anwendungen geeignet ist, weist ein Gehäuse auf mit einer insbesondere aus Blech gebildeten Gehäusewandung, welche ein Gehäuseinneres 77 begrenzt. Weiterhin weist die Gehäusewandung eine Abdeckung 78 mit einer durchgehenden Abdeckungsöffnung 79 auf. In dieser Abdeckungsöffnung 79 ist das Aufnahmemodul 16 so angeordnet, dass sich ein endseitiger Teilabschnitt des Aufnahmemoduls, insbesondere die Aufnahme 23 in das Gehäuseinnere 77 erstreckt. Die Aufnahme weist eine Aufnahmelängsrichtung und eine Aufnahmerichtung auf, welche in welche sich die Aufnahme 23 erstreckt und welche die Orientierung der Aufnahme 23 bzw. des Aufnahmemoduls 16 in der Anlage beschreibt. Die Aufnahmerichtung zeigt in das Gehäuseinnere 77 hinein. Das Aufnahmemodul 16 ist derart in der Abdeckungsöffnung 79 angeordnet, dass die Aufnahmerichtung 115 einen vektoriellen Anteil mit einer Richtung entgegengesetzt zu einer Richtung einer Schwerkraft aufweist. Zudem weist das Aufnahmemodul 16 einen Abschnitt außerhalb des Gehäuseinneren 77 auf, in dem es einen insbesondere umlaufenden Absatz 81 aufweist. Die Abdeckung 78 weist eine Abdeckungsfläche 82 auf und der Absatz 81 weist eine Absatzfläche 83 auf. Beide Flächen sind einander zugewandt und ein Neigungskörper 116 ist zwischen Absatzfläche 83 und Abdeckungsfläche 82 eingespannt. Dieser ist keilförmig und insbesondere spitzwinklige ausgebildet. Gemäß der abgebildeten Ausgestaltung nimmt der Neigungskörper 116 in einem Längsschnitt eine Grundform eines insbesondere rechtwinkligen Trapezes an. Der Neigungskörper 116 weist zudem eine erste Seitenfläche 117 auf, in der eine erste Seitenflächenebene verläuft und eine zweite Seitenfläche 118, in der eine zweite Seitenflächenebene verläuft. Beide Seitenflächenebenen schneiden sich unter einem Winkel *α* von 0,1° bis 15, insbesondere 0,2° bis 10° und bevorzugt von 0,5° bis 7°. Der Neigungskörper 116 weist eine Neigungskörperöffnung 119 auf - deren Grundform im Wesentlichen der äußeren Grundform des Aufnahmemodulkörpers 22 entspricht - durch die sich im eingebauten Zustand das Aufnahmemodul 116 zumindest teilweise erstreckt. Der Neigungskörper 116 ist zudem als Dichtmittel zum Abdichten des Gehäuseinneren 77 gegen Flüssigkeiten ausgebildet. Dafür kann er aus einer Vielzahl an Dichtstoffen gebildet sein, die für den Einsatz als Dichtmittel in Bioprozessanwendungen geeignet sind. Ein vorteilhafter Dichtstoff ist ein EPDM Baustoff.

Die Ausgestaltung der Fig. 6B unterscheidet sich von der Ausgestaltung der Fig. 6A darin, dass der Neigungskörper 116 eine Neigungskörperaufnahme für ein Dichtmittel 120 aufweist, welches in der Neigungskörperaufnahme angeordnet ist. In dem Fall ist der Neigungskörper 116 nicht als Dichtmittel ausgebildet. Als Dichtring 120 kann beispielsweise ein O-Ring eingesetzt werden.

Die Ausgestaltung der Fig. 6C unterscheidet sich im Wesentlichen von der Ausgestaltung der Fig. 6B darin, dass zwischen Neigungskörper 116 und Abdeckungsfläche 82 eine scheibenförmiges Dichtmittel 120 angeordnet ist. In dem Fall ist eine Neigungskörperaufnahme nicht zwingend notwendig.

Die nicht unter den Schutzbereich der Ansprüche fallende Ausgestaltung der Fig. 6D unterscheidet sich im Wesentlichen von der Ausgestaltung der Fig. 6A darin, die Absatzfläche 83 und die Abdeckungsfläche 82 einander zugewandt sind und parallel zueinander verlaufen. Dabei schneiden sich eine auf der Absatzfläche 83 verlaufene Absatzebene und eine auf einer Stirnfläche 121 verlaufende Stirnflächenebene unter einem Winkel β von 0,1° bis 15°, insbesondere von 0,2° bis 10° und bevorzugt von 0,5° bis 7°. Der Neigungskörper und der Absatz können einstückig ausgebildet sein oder der stoffschlüssig miteinander verbunden sein.

### Bezugszeichenliste

Koppleranordnung 1
Messgerät 2
Messrohr 3
Messrohrmodul 4
Fixierkörperanordnung 5
Kopplerelement 6
Schwingungserreger 7
Schwingungssensor 8
Magnetanordnung 9
Magnet 10
Schenkel 11
Messrohrkörper 13
Mess- und/oder Betriebsschaltung 15
Aufnahmemodul 16
Aufnahmemodulkörper 22
Aufnahme 23
Seitenfläche 24
Montagefläche 26
Führung 28
Erregermagnet 36
Erregerspule 37
Sensormagnet 38
Sensorspule 39
Anlage für biotechnische Anwendungen 74
Gehäuse 75
Gehäusewandung 76
Gehäuseinneres 77
Abdeckung 78
Abdeckungsöffnung 79
Aufnahmeabschnitt 80
Absatz 81
Abdeckungsfläche 82
Absatzfläche 83
Aufnahmerichtung 115
Neigungskörper 116
erste Seitenfläche 117
zweite Seitenfläche 118
Neigungskörperöffnung 119
Dichtmittel 120
Stirnfläche 121

## Patentansprüche

1. Prozessüberwachungsvorrichtung, bevorzugt für pharmazeutische Bioprozessanwendungen, umfassend:
- ein Messrohrmodul (4),
wobei das Messrohrmodul (4) mindestens ein, von einem Medium durchströmbares Messrohr (3) umfasst;
- ein Aufnahmemodul (16),
wobei das Aufnahmemodul (16) eine Aufnahmemodulkörper (22) aufweist, der zumindest teilweise eine Aufnahme (23) begrenzt,
wobei das Messrohrmodul (4) in die Aufnahme (23) einführbar ist,
wobei das Messrohrmodul (4) mechanisch trennbar mit dem Aufnahmemodul (16) verbindbar ist; und
- eine Anlage (74), insbesondere für biotechnische Anwendungen,
wobei die Anlage (74) ein Gehäuse (75) aufweist,
wobei das Gehäuse (75) eine insbesondere aus Blech gebildete Gehäusewandung (76) aufweist, welche ein Gehäuseinneres (77) begrenzt,
wobei die Gehäusewandung (76) eine Abdeckung (78) aufweist,
wobei die Abdeckung (78) eine Abdeckungsöffnung (79) aufweist,
wobei sich das Aufnahmemodul (16), insbesondere die Aufnahme (23) durch die Abdeckungsöffnung (79) in das Gehäuseinnere (77) erstreckt,
wobei sich die Aufnahme (23) in eine Aufnahmerichtung (115) erstreckt,
wobei das Aufnahmemodul (16) derart in der Abdeckungsöffnung (79) angeordnet ist, dass die Aufnahmerichtung (115) einen vektoriellen Anteil mit einer Richtung entgegengesetzt zu einer Richtung einer Schwerkraft aufweist,
**dadurch gekennzeichnet, dass** das Aufnahmemodul (16) einen Abschnitt aufweist,
wobei sich der Abschnitt außerhalb des Gehäuseinnere (77) befindet,
wobei das Aufnahmemodul (16) im Abschnitt einen insbesondere umlaufenden Absatz (81) aufweist,
wobei die Abdeckung (78) eine Abdeckungsfläche (82) aufweist,
wobei der Absatz (81) eine Absatzfläche (83) aufweist,
wobei die Absatzfläche (83) und die Abdeckungsfläche (82) einander zugewandt sind,
wobei ein Neigungskörper (116) zwischen Absatzfläche (83) und Abdeckungsfläche (82) eingespannt ist,
wobei der insbesondere spitzwinklige Neigungskörper (116) keilförmig ausgebildet ist.

2. Prozessüberwachungsvorrichtung nach Anspruch 1,
wobei der Neigungskörper (116) eine erste Seitenfläche (117) aufweist in der eine erste Seitenflächenebene verläuft,
wobei der Neigungskörper eine zweite Seitenfläche (118) aufweist in der eine zweite Seitenflächenebene verläuft,
wobei sich die erste Seitenflächenebene und die zweite Seitenflächenebene unter einen Winkel *α* von 0,1° bis 15°, insbesondere 0,2° bis 10° und bevorzugt von 0,5° bis 7° aufweist.

3. Prozessüberwachungsvorrichtung nach Anspruch 1 und/oder 2,
wobei der Neigungskörper (116) eine Neigungskörperöffnung (119) aufweist,
wobei sich das Aufnahmemodul (116) zumindest teilweise durch die Neigungskörperöffnung (119) erstreckt.

4. Prozessüberwachungsvorrichtung nach mindestens einem der Ansprüche 1 bis 3,
wobei der Neigungskörper (116) als Dichtmittel, insbesondere aus einem EPDM Baustoff zum Abdichten des Gehäuseinneren (77) gegen Flüssigkeiten ausgebildet ist.

5. Prozessüberwachungsvorrichtung nach mindestens einem der Ansprüche 1 bis 3,
wobei der Neigungskörper (116) eine Neigungskörperaufnahme für ein Dichtmittel (120) aufweist,
wobei ein Dichtmittel (120) in der Neigungskörperaufnahme angeordnet ist.

6. Prozessüberwachungsvorrichtung nach mindestens einem der Ansprüche 1 bis 3 und 5,
wobei zwischen Neigungskörper (116) und Abdeckungsfläche (82) eine scheibenförmiges Dichtmittel (120) angeordnet ist.

7. Prozessüberwachungsvorrichtung nach mindestens einem der Ansprüche 1 bis 6,
wobei der Neigungskörper (116) in einem Längsschnitt eine Grundform eines insbesondere rechtwinkligen Trapezes annimmt.

8. Prozessüberwachungsvorrichtung nach mindestens einem der Ansprüche 1 bis 7,
wobei der Neigungskörper (116) eine rechteckige Grundform aufweist mit einem durch die Neigungsöffnung (119) gebildeten rechteckigen Ausschnitt.

9. Prozessüberwachungsvorrichtung nach mindestens einem der vorhergehenden Ansprüche,
wobei das Aufnahmemodul (16) eine Befestigungsanordnung (84) umfasst,
wobei die Befestigungsanordnung (84) im Gehäuseinneren (77) angeordnet ist,
wobei die Befestigungsanordnung (84) dazu eingerichtet ist, das Aufnahmemodul (16) mit der Abdeckung (78) insbesondere mechanisch lösbar zu verbinden.

10. Prozessüberwachungsvorrichtung nach mindestens einem der vorhergehenden Ansprüche,
wobei die Anlage (74) einen Bioreaktor oder eine Anlage für chromatographische Aufreinigungsverfahren umfasst.

11. Prozessüberwachungsvorrichtung nach mindestens einem der vorhergehenden Ansprüche,
wobei das Messrohrmodul (4) eine erste Schwingungserregerkomponente mindestens eines Schwingungserregers (7) aufweist, welcher dazu eingerichtet ist, das Messrohrmodul (4), insbesondere das mindestens eine Messrohr (3) zu Schwingungen anzuregen,
wobei das Messrohrmodul (4) eine erste Schwingungssensorkomponente mindestens eines Schwingungssensors (8) aufweist, welcher dazu eingerichtet ist, die Schwingungen des mindestens einen Messrohres (3) zu erfassen,
wobei das Aufnahmemodul (16) eine zweite Schwingungserregerkomponente des mindestens einen Schwingungserregers aufweist,
wobei das Aufnahmemodul eine zweite Schwingungssensorkomponente des mindestens einen Schwingungssensors aufweist.

12. Prozessüberwachungsvorrichtung nach dem vorherigen Anspruch,
wobei zumindest das Messrohrmodul (4) und das Aufnahmemodul (16) ein modulares Coriolis-Durchflussmessgerät bilden.

## Claims

1. A process monitoring device, preferably for pharmaceutical bioprocess applications, comprising:
- a measuring tube module (4),
wherein the measuring tube module (4) comprises at least one measuring tube (3) through which a medium can flow;
- a recording module (16),
wherein the receiving module (16) has a receiving module body (22) which at least partially delimits a receptacle (23),
wherein the measuring tube module (4) can be inserted into the receptacle (23),
wherein the measuring tube module (4) is mechanically separably connectable to the receiving module (16); and
- a plant (74), in particular for biotechnical applications,
wherein the system (74) has a housing (75),
wherein the housing (75) has a housing wall (76), in particular formed from sheet metal, which defines an interior (77) of the housing,
wherein the housing wall (76) has a cover (78),
wherein the cover (78) has a cover opening (79),
wherein the receptacle module (16), in particular the receptacle (23), extends through the cover opening (79) into the interior of the housing (77),
wherein the receptacle (23) extends in a receiving direction (115),
wherein the receiving module (16) is arranged in the cover opening (79) such that the receiving direction (115) has a vectorial portion with a direction opposite to a direction of a gravitational force,
**characterized in that** the receiving module (16) has a section,
whereby the section is located outside the interior of the housing (77),
wherein the receiving module (16) has a particularly circumferential shoulder (81) in the section,
wherein the cover (78) has a covering surface (82),
wherein the heel (81) has a heel surface (83),
wherein the heel surface (83) and the cover surface (82) face each other,
wherein an inclination body (116) is clamped between the heel surface (83) and the cover surface (82),
wherein the in particular acute-angled inclination body (116) is wedge-shaped.

2. Process monitoring device according to claim 1,
wherein the inclination body (116) has a first lateral surface (117) in which a first lateral surface plane extends,
wherein the inclination body has a second lateral surface (118) in which a second lateral surface plane extends,
wherein the first lateral surface plane and the second lateral surface plane are at an angle *α* of 0.1° to 15°, in particular 0.2° to 10° and preferably 0.5° to 7°.

3. Process monitoring device according to claim 1 and/or 2,
wherein the inclination body (116) has an inclination body opening (119),
wherein the receiving module (116) extends at least partially through the inclination body opening (119).

4. Process monitoring device according to at least one of claims 1 to 3,
wherein the inclined body (116) is designed as a sealing means, in particular of an EPDM material for sealing the interior of the housing (77) against liquids.

5. Process monitoring device according to at least one of claims 1 to 3,
wherein the inclination body (116) has an inclination body receptacle for a sealing means (120),
wherein a sealing means (120) is arranged in the inclination body receptacle.

6. Process monitoring device according to at least one of claims 1 to 3 and 5,
wherein a disk-shaped sealing means (120) is arranged between the inclination body (116) and the cover surface (82).

7. Process monitoring device according to at least one of claims 1 to 6,
wherein the inclined body (116) assumes a basic shape of a trapezoid, in particular a right-angled trapezoid, in a longitudinal section.

8. Process monitoring device according to at least one of claims 1 to 7,
wherein the inclination body (116) has a rectangular basic shape with a rectangular cut-out formed by the inclination opening (119)

9. Process monitoring device according to at least one of the preceding claims,
wherein the receiving module (16) comprises a fastening arrangement (84),
wherein the fastening arrangement (84) is arranged inside the housing (77),
wherein the fastening arrangement (84) is designed to connect the receiving module (16) to the cover (78), in particular in a mechanically detachable manner.

10. Process monitoring device according to at least one of the preceding claims,
wherein the system (74) comprises a bioreactor or a system for chromatographic purification processes.

11. Process monitoring device according to at least one of the preceding claims,
wherein the measuring tube module (4) has a first vibration exciter component of at least one vibration exciter (7), which is set up to excite the measuring tube module (4), in particular the at least one measuring tube (3), to vibrate,
wherein the measuring tube module (4) has a first vibration sensor component of at least one vibration sensor (8), which is set up to detect the vibrations of the at least one measuring tube (3),
wherein the receiving module (16) comprises a second vibration exciter component of the at least one vibration exciter,
wherein the receiving module comprises a second vibration sensor component of the at least one vibration sensor.

12. Process monitoring device according to the preceding claim,
wherein at least the measuring tube module (4) and the receiving module (16) form a modular Coriolis flowmeter.

## Revendications

1. Dispositif de surveillance de processus, de préférence pour des applications de bioprocessus pharmaceutiques, comprenant :
- un module de tube de mesure (4),
le module de tube de mesure (4) comprenant au moins un tube de mesure (3) pouvant être traversé par un fluide ;
- un module d'enregistrement (16),
dans lequel le module de réception (16) présente un corps de module de réception (22) qui délimite au moins partiellement un logement (23),
le module de tube de mesure (4) pouvant être introduit dans le logement (23),
le module de tube de mesure (4) pouvant être relié mécaniquement de manière séparable au module de réception (16) ; et
- une installation (74), en particulier pour des applications biotechnologiques,
l'installation (74) comprenant un boîtier (75),
le boîtier (75) présentant une paroi de boîtier (76) formée en particulier de tôle, qui délimite un intérieur de boîtier (77),
dans lequel la paroi de boîtier (76) comporte un couvercle (78),
dans lequel le couvercle (78) comporte une ouverture de couvercle (79),
le module de réception (16), en particulier le logement (23), s'étendant à travers l'ouverture de recouvrement (79) dans l'intérieur du boîtier (77),
dans lequel le logement (23) s'étend dans une direction de logement (115),
dans lequel le module de réception (16) est disposé dans l'ouverture de couvercle (79) de telle sorte que la direction de réception (115) a une partie vectorielle avec une direction opposée à une direction d'une force de gravité,
**caractérisé en ce que** le module de réception (16) comprend une section,
ladite section étant située à l'extérieur de l'intérieur du boîtier (77),
le module de réception (16) présentant dans la section un épaulement (81) en particulier périphérique,
dans lequel le couvercle (78) comprend une surface de recouvrement (82),
dans lequel le talon (81) présente une surface de talon (83),
dans lequel la surface de talon (83) et la surface de couverture (82) sont tournées l'une vers l'autre,
dans lequel un corps d'inclinaison (116) est serré entre la surface de talon (83) et la surface de recouvrement (82),
le corps d'inclinaison (116), en particulier à angle aigu, étant réalisé en forme de coin.

2. Dispositif de surveillance de processus selon la revendication 1,
le corps d'inclinaison (116) présentant une première surface latérale (117) dans laquelle s'étend un premier plan de surface latérale,
le corps d'inclinaison présentant une deuxième surface latérale (118) dans laquelle s'étend un deuxième plan de surface latérale,
le premier plan de surface latérale et le deuxième plan de surface latérale se rejoignant sous un angle *α* de 0,1° à 15°, en particulier de 0,2° à 10° et de préférence de 0,5° à 7°.

3. Dispositif de surveillance de processus selon la revendication 1 et/ou 2,
dans lequel le corps d'inclinaison (116) comprend une ouverture de corps d'inclinaison (119),
dans lequel le module de réception (116) s'étend au moins partiellement à travers l'ouverture de corps d'inclinaison (119).

4. Dispositif de surveillance de processus selon au moins l'une des revendications 1 à 3,
le corps d'inclinaison (116) étant conçu comme un moyen d'étanchéité, en particulier en un matériau de construction EPDM, pour étancher l'intérieur du boîtier (77) contre les liquides.

5. Dispositif de surveillance de processus selon au moins l'une des revendications 1 à 3,
dans lequel le corps d'inclinaison (116) comprend un logement de corps d'inclinaison pour un moyen d'étanchéité (120),
dans lequel un moyen d'étanchéité (120) est disposé dans le logement de corps incliné.

6. Dispositif de surveillance de processus selon au moins l'une des revendications 1 à 3 et 5,
un moyen d'étanchéité (120) en forme de disque étant disposé entre le corps d'inclinaison (116) et la surface de recouvrement (82).

7. Dispositif de surveillance de processus selon au moins l'une des revendications 1 à 6,
le corps d'inclinaison (116) adoptant, en coupe longitudinale, une forme de base d'un trapèze notamment rectangulaire.

8. Dispositif de surveillance de processus selon au moins l'une des revendications 1 à 7,
dans lequel le corps d'inclinaison (116) présente une forme de base rectangulaire avec une découpe rectangulaire formée par l'ouverture d'inclinaison (119)

9. Dispositif de surveillance de processus selon au moins l'une des revendications précédentes,
dans lequel le module de réception (16) comprend un ensemble de fixation (84), l'ensemble de fixation (84) étant disposé à l'intérieur du boîtier (77),
l'agencement de fixation (84) étant conçu pour relier le module de réception (16) au couvercle (78), en particulier de manière détachable mécaniquement.

10. Dispositif de surveillance de processus selon au moins l'une des revendications précédentes,
dans lequel l'installation (74) comprend un bioréacteur ou une installation pour des procédés de purification chromatographique.

11. Dispositif de surveillance de processus selon au moins l'une des revendications précédentes,
le module de tube de mesure (4) présentant un premier composant d'excitation d'oscillations d'au moins un excitateur d'oscillations (7), qui est conçu pour exciter le module de tube de mesure (4), en particulier le au moins un tube de mesure (3), en oscillations,
dans lequel le module de tube de mesure (4) comprend un premier composant de détection de vibrations d'au moins un capteur de vibrations (8) qui est conçu pour détecter les vibrations du au moins un tube de mesure (3),
dans lequel le module de réception (16) présente un deuxième composant d'excitation de vibrations de l'au moins un excitateur de vibrations,
dans lequel le module de réception comprend un deuxième composant de capteur de vibrations dudit au moins un capteur de vibrations.

12. Dispositif de surveillance de processus selon la revendication précédente,
dans lequel au moins le module de tube de mesure (4) et le module de réception (16) forment un débitmètre à effet Coriolis modulaire.
